# EUROPEAN PATENT APPLICATION

(11) **EP 4 216 145 A1**
(43) Date of publication of application: **26.07.2023**
(21) Application number: 22152961.3
(22) Date of filing: 24.01.2022
(51) Int. Cl.: G06Q 50/04, B33Y 50/00

(54) **METHOD AND SYSTEM FOR AUTOMATICALLY SCREENING VEHICLE SPARE PARTS DATABASES FOR EVALUATING SUITABILITY OF ADDITIVE MANUFACTURING**

(71) Applicant: VOLVO TRUCK CORPORATION, 405 08 Göteborg (SE)
(72) Inventor: ZHONG, Yuan, 182 30 Danderyd (SE); HÖGLIND, Andreas, 417 62 Göteborg (SE); BRINCK, Gustaf, 412 82 Göteborg (SE); PETRIN, Leo, 439 73 Fjärås (SE)
(74) Representative: Valea AB

(57) **Abstract**

A method and system for automatically screening one or more databases containing information of vehicle spare parts to evaluate suitability of producing the spare parts using additive manufacturing is provided. The method comprises collecting (110) information of a spare part from the one or more databases; evaluating (120) the information of the spare part based on a set of criteria; and setting (130) a score to the spare part based on an evaluating result, wherein the score indicates the suitability of producing the spare part using additive manufacturing.

## Description

### TECHNICAL FIELD

The invention relates to a method and system for automatically screening one or more databases containing information of vehicle spare parts to evaluate suitability of producing the spare parts using additive manufacturing.

The invention can be applied in any databases containing information of vehicle spare parts for any types of vehicles such as trucks, buses, cars and construction equipment.

### BACKGROUND

Three dimensions (3D) printing or additive manufacturing (AM) is a construction of a three-dimensional object from a computer-aided design (CAD) model or a digital 3D model. 3D printing or AM can be used for producing everything, such as spare parts, prototypes etc. Products are manufactured layer by layer and are close to their final shape, thereby reducing wastage. Materials such as metals, polymers, wood flour, biocompatible materials, sand and composites are used at present. 3D printing or AM paves a way for manufacturing on demand for many industries. Vehicle industries are studying and analysing vehicle spare parts to explore what parts can be printed and what parts should be printed. Manually screening vehicle spare parts database is the existing solution.

However, vehicle spare parts database usually contains hundreds of thousands of spare parts. It is impossible to manually select the ones that have high potential for 3D printing. It is essential to have an algorithm and a system based on this algorithm to select the ones that has potential for 3D printing. Many companies are exploring automatic screening methods for spare parts category. However, many of them need to analyze 3D CAD file which is a huge burden for data handling and processing. For large corporate engineering and manufacturing companies, parts catalogs can contain a million parts or more, making it difficult to identify the right parts for AM. Common barriers when starting the parts selection process include a lack of AM expertise, time and resource constraints which are correlated heavily with the number of cataloged parts. For most companies, this situation leads to an unstructured and inefficient AM part identification process. Furthermore, there is no "one-size-fits-all" software solution that will work for every company.

Bernhard Langefeld has analyzed in detail the advantages of additive manufacturing and also the barriers and shortages of parts selection process for additive manufacturing in article "How a digital inventory and additive manufacturing can mitigate risks" published at https://www.rolandberger.com/en/Insights/Publications/De-risking-your-supply-chain-in-times-of-the-Coronavirus.html. In this article, a strategic, semi-automatic and software-based process of how to screen parts to be used for AM is described. It also states in this article that future software development aims to minimize the manual process or make the decision process more efficient by using Artificial Intelligent (Al) and machine learning, however, this advancement might take a couple more years.

US2015248504 discloses a method and system for creating composite 3D models for building information modeling (BIM). The method and system provide the creation of new composite 3D and higher dimensional models from plural different 3D models from plural different manufacturers for existing 3D modelling.

### SUMMARY

An object of the invention is to provide a method and system for automatically screening databases containing information of vehicle spare parts to evaluate suitability of producing the spare parts using additive manufacturing.

According to a first aspect of the invention, the object is achieved by a method according to claim 1. The method comprises collecting information of a spare part from the one or more databases; evaluating the information of the spare part based on a set of criteria; and setting a score to the spare part based on an evaluating result, where the score indicates the suitability of producing the spare part using additive manufacturing. An advantage of this may be that all needed data from the different databases can be collected automatically. Based on the collected data and the set of criteria, the method can automatically screen out the parts that is not suitable for additive manufacturing and give a score to the rest ones indicating the suitability of 3D printing. In this way, more than 90% of the manual work can be saved.

According to a second aspect of the invention, the object is achieved by a screening tool configured to perform the method described above.

According to a third aspect of the invention, the object is achieved by a data processing system comprising a screening tool configured to perform the method described above.

The method according to embodiments herein is implemented as a computer program and used as an automatic screening tool which reads into different databases and collects needed data from the databases. Based on the data, the screening tool will screen out the parts that is not suitable for additive manufacturing and give a score to the rest ones indicating the suitability of 3D printing, both technically and economically.

The method and system can avoid analyzing 3D CAD file but still give a reasonable result since the algorithm of selecting parts is based on evaluating the information of the spare part with a set of criteria and setting a score to the spare part based on the evaluating result.

According to one embodiment, the method comprises collecting material information of the spare part from a 2-dimentiomal (2D) drawing database using Optical Character Recognition (OCR) function. That is the method and system can use OCR function and read into technical documents, e.g., 2D drawings and special requirement document. This greatly improve the data accuracy. For example, the material information that is not stored in any of other engineering database but is stated in a 2D drawing database can be obtained.

The method and system according to embodiments herein may be designed, adapted, or dedicated to each company's own databases.

With the method and system according to embodiments herein, it will be one step closer to digital warehouse and manufacturing on demand. It will shorten the manufacturing lead time and save cost for vehicle industry.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a flow chart showing a method according to embodiment herein;
Fig. 2 is a flow chart showing an example screening algorithm according to embodiment herein; and
Fig. 3 is a data processing system in which a screening tool according to embodiment herein may be implemented.

### DETAILED DESCRIPTION

According to embodiments herein, a screening tool is developed to select spare parts in vehicle spare parts database that are suitable for additive manufacturing, both technically and economically. The screening tool is implemented as a computer program which may be based on e.g., Python code, and will read into different databases containing information of vehicle spare parts and will collect needed data from these databases. Based on the data, the screening tool will screen out the parts that is not suitable for additive manufacturing and give a score to the rest ones indicating the suitability of 3D printing, both technically and economically.

Python is an interpreted high-level general-purpose programming language. Its language constructs as well as its object-oriented approach are suitable to write clear, logical code for small and large-scale projects, such as the screening tool according to embodiments herein for automatically screening one or more databases to evaluate suitability of producing spare parts using additive manufacturing. However, the screening tool according to embodiments herein may also be implemented by other types of programming languages.

The different databases may comprise Engineering Database (EDB), Global Purchasing System (GPS) database, Service and Market Logistics (SML) database etc.

The EDB is an engineering database that quotes several databases information, e.g. a database has information on materials, post treatment, function group, critical or special characteristic etc. of spare parts, one database where 2D drawings, technical requirement documents of spare parts are stored. Therefore, the EDB is a general term for databases which store information such as 2D drawings, technical requirement documents, materials, post treatment, function group, critical or special characteristic of the parts, etc.

The SML databases contains information on minimum order quantity, warehouse cost, estimated order quantity etc. of spare parts.

The GPS database contains information on price, order quantity etc. of spare parts.

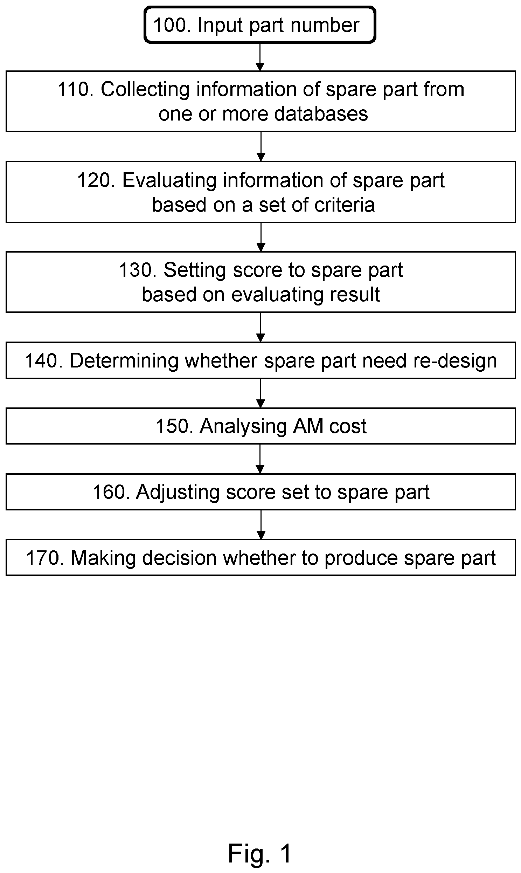

Fig.1 is a flow chart showing a method for automatically screening one or more databases to evaluate suitability of producing spare parts using additive manufacturing according to embodiments herein. The method is implemented as a computer program and used as a screening tool for automatically screening one or more databases. The method comprises the following steps:
**Step 100**
   A part number of a spare part is inputted to the screening tool.
**Step 110**

The screening tool collects information of the spare part from one or more databases containing information of vehicle spare parts.

The one or more databases may comprise EDB, GPS, SML databases, etc.

The information of a spare part may comprise one or more of the following parameters:
a) A parameter indicating whether a part is superseded or not;
b) A parameter indicating whether a part is a spare part or not;
c) Part age or End of Production (EOP) years;
d) Part name;
e) Part weight;
f) Part size;
g) Part type;
h) A parameter indicating special or critical characteristic of a part;
i) Part segment code;
j) Part material;
k) A parameter indicating whether there is 2D drawing or not for a part,
l) Annual consumption of a part,
m) Tolerance level of a part;
n) Surface roughness level of a part
o) Function group of a part.

### Step 120

The screening tool evaluates the information of the spare part based on a set of criteria.

The set of criteria may comprise any one or any combination of the following criteria:
a) whether a part is superseded or not;
b) whether a part is a spare part or not;
c) whether a weight of a part is larger than a weight threshold or not;
d) whether a size of a part is larger than a size threshold or not;
e) whether a part type is a single part, assembly of parts or not
f) whether a part name has forbidden words.
g) whether a part segment code has passing words or forbidden words
h) whether a part material information is in any one of a Kola database, a 2D drawing database, the part segment code, the part name or not;
i) whether these is a 2D drawing for a part or not;
j) whether an annual consumption of a part is larger than an annual consumption threshold or not;
k) whether a tolerance level of a part is larger than a tolerance threshold value or not;
l) whether a surface roughness of a part is larger than a surface roughness threshold value or not.

### Step 130

The screening tool sets a score to the spare part based on an evaluating result. The score indicates the suitability of producing the spare part using additive manufacturing. A score may be set between 0 and 1, with 0 indicates not suitable for AM and with 1 indicates most suitable or 100 percent suitability for AM.

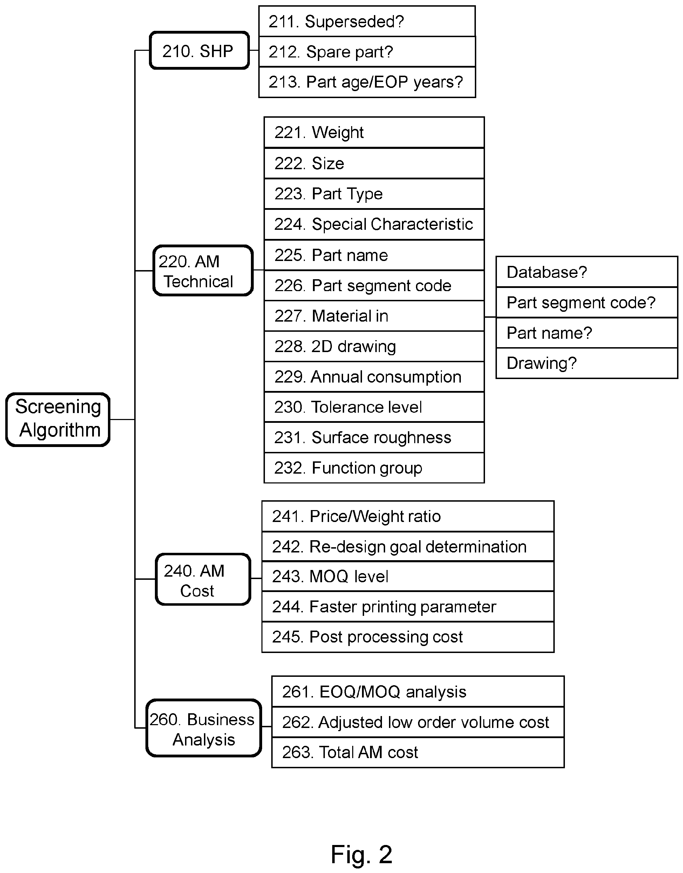

In the following, a screening algorithm, i.e. the set of criteria listed above to evaluate the information of the spare part will be described in detail with reference to Fig. 2. Fig. 2 is a flow chart of an example of the screening algorithm according to embodiments herein. The screening algorithm is based on the set of criteria listed above, used as a set of filters to filter and evaluate the information of the spare parts.

As shown in Fig. 2, the screening algorithm is divided into different sections and in each section, different information of the spare part is evaluated and filtered.

### Section 210

In this section, information from stock holding policy (SHP) database is evaluated in one or more of the following steps which may be performed in any suitable order. SHP database has information on EOP years for spare parts. According to SHP, it is needed to keep stock of a spare part solution for 15 years after the end of production.

**Step 211:** The screening tool checks whether a part is superseded or not. If the part is superseded, then no AM for this part, a score with value e.g. 0 may be set to this part.

**Step 212:** The screening tool checks whether a part is a spare part or not. If the part is not a spare part, then no AM for this part, a score with value e.g. 0 may be set to this part.

**Step 213:** The screening tool checks the part age or EOP years. If the part age or EOP years is too old, e.g. more than 15 years, then no AM for this part, a score with value e.g. 0 may be set to this part.

### Section 220

In this section, information on AM technical aspects is evaluated in one or more of the following steps which may be performed in any suitable order.

**Step 221:** The size of a part is an important factor due to the limitation in size of 3D printers. If no measurements on size are available, weight may be a good indication of size and can screening out the spare parts which are too big. The screening tool checks the weight of the part. If the weight is larger than a weight threshold A, then the spare part may be too big and AM is not suitable for this part, a score with value e.g. 0 may be set to this part. The weight threshold A may be determined based on the size limitation of 3D printers.

**Step 222:** If a part is too big, it will not fit into a 3D printer or the physical properties of the part will not meet the requirements set by a vehicle industry. To be able to fit a part into a 3D printer, and also to have better physical properties of the part build, the screening tool checks the size of the part. If the size is larger than a size threshold B1, or the 3 dimensions in x, y, z of the part is larger than a size threshold B2, i.e. x,y,z,>B2, then AM is not suitable for this part, a score with value e.g. 0 may be set to this part. The size threshold B1or B2 may be determined based on the size limitation of a 3D printer.

**Step 223:** The screening tool checks the part type. A single part type is relative simpler to print. Assembly part type means the assembly needs some modification on the 3D models, although sometimes the modification may be minor, it still means some engineering efforts. Therefore, if the part is a single part, then a score with value e.g. 0.2 may be set to this part, if the part is an assembly part, then a score with value e.g. 0 may be set to this part.

**Step 224:** The screening tool checks whether there is a special or critical characteristic for a part. If a part has special characteristics, the part will have higher requirements attached to it, e.g. Critical Characteristics (CC) may refer to special characteristics which can affect safety, Special Characteristics (SC) may refer to special characteristics which can affect compliance with regulations, form, fit, function and performance, or subsequent manufacturing-process steps etc. For example, if there is a CC or SC for a part, then AM may not be suitable for the time being for this part, a score with value e.g. 0 may be set to this part.

**Step 225:** The screening tool checks the part name and see whether a part name has forbidden words. If the part name indicates that the part will be non-printable or not a good candidate for AM from experiences, then the screening tool will stop investigating this part further and a score with value e.g. 0 may be set to this part. For example, if the part name is "Gasket", it indicates that it has the wrong material and it is very cheap to produce with traditional manufacturing methods, then it is not a good candidate for AM known from experiences.

**Step 226:** The screening tool checks the part segment code to evaluate whether a part segment code has passing words or forbidden words. The segment code can indicate what material or where on a vehicle the part is located. If segment code indicates e.g. rubber, then it is known the part is a poor candidate for AM, then a score with value e.g. 0 may be set to this part.

**Step 227:** The screening tool checks whether there is part material information in the engineering database, in the part segment code, in the part name or in the 2D drawing.

**Step 228:** If there is no material information in the part segment code, the part name and in any other engineering databases, the screening tool checks whether these is a 2D drawing for the part. If there is no 2D drawing for this part, then no AM for this part, a score with value e.g. 0 may be set to this part. If there is 2D drawing for this part, the screening tool uses OCR function to check the 2D drawing and obtain material information for this part.

**Step 229:** The screening tool checks an annual consumption of a part to evaluate whether the annual consumption of the part is larger than an annual consumption threshold. If the annual consumption for a part is too large, economies of scale will apply and the price per part will be very low due to the high volume produced, then AM is a poor option for this part. The annual consumption threshold may be determined based on comparing the price per part and AM cost for a part. If the annual consumption of the part is larger than the annual consumption threshold, then this part will be considered unsuitable for AM, a score with value e.g. 0 may be set to this part.

**Step 230**: The screening tool checks whether a tolerance level of a part is larger than a tolerance threshold value e.g. 0.2mm or not. For example, if the tolerance level of the part is smaller than 0.2 mm, machining is needed after AM, then it is not suitable for AM and a score with value e.g. 0 may be set to this part. If the tolerance level is bigger than 0.2 mm, the part can be used directly after printing, then it is suitable for AM and a score with value e.g. 0.2 may be set to this part. The tolerance level may also be used for estimating post processing cost after AM for a part.

**Step 231**: The screening tool checks whether a surface roughness requirement of a part is larger than a surface roughness threshold value e.g. 5 µm or not. For example, if the surface roughness requirement is below 5 µm, further advanced surface treatment is needed after AM, then a score with value e.g. 0 may be set to this part. If the surface roughness requirement is above 5 µm, basic sand blasting is enough after AM, then a score with value e.g. 0.2 may be set to this part. The surface roughness requirement may also be used for estimating post processing cost after AM for a part.

**Step 232**: The screening tool checks the function group of a part. The function group indicates the function of a part and where on a vehicle a part is located. If the function of a part is not suitable for AM, then a score with value e.g. 0 may be set to this part. If the part is located either in an engine or a gearbox, e.g. the function group 2 or 4, it is known that the post processing requirements will be higher than on other parts of the vehicle. Higher post processing requirements gives higher total cost of 3D printing the part. So the function group may also be used for estimating post processing cost after AM for a part.

After these steps listed above are performed, the screening tool has screen out the spare parts that are not suitable for additive manufacturing and has given scores to the rest ones in the vehicle spare parts database indicating the suitability of 3D printing these parts from the technical point of view.

To further evaluate the suitability of 3D printing these parts from economic point of view, AM cost estimating and business analysing may be performed for these spare parts.

### Section 240

In this section, information on AM cost aspect is evaluated in one or more of the following steps which may be performed in any suitable order.

**Step 241:** The screening tool calculates a ratio of price to weight for a part. For example, if a part weight is 100 gram and the original price of the spare part is 50 euros, the ratio of price to weight is 0.5 euro/gram for this part. This is to determine if the part needs a re-design or not. If re-design is needed, how much a weight reduction is needed.

**Step 242:** The screening tool determines a re-design weight reduction goal. The re-design weight reduction goal may be determined by comparing additive manufacturing cost for the spare part with the original price of the spare part. For example, if it is known that the price for a part with steel material is around e.g. 1 euro/gram from an additive manufacturing supplier, and the ratio of price to weight is e.g. 0.5 euro/gram for a part, in order to make additive manufacturing this part cheaper than the original part price, it is needed to re-design the part and lightweight it at least to 50 gram, then the price for additive manufacturing is 50 euros which is the same as the original price. So, in this case, the re-design weight reduction goal is (100gram-50gram)/100 gram = 50%. The re-design weight reduction goal may be less than 25% or more than 50%. Optimising product design to achieve maximum weight reduction, for example, is another plus for AM. This will create new and unique business models throughout the entire value chain.

**Step 243:** The screening tool checks the Minimum Order Quantity (MOQ) level for a part. Spare parts suppliers usually have an MOQ level, e.g. 1000, for a part, i.e. a company must order 1000 pieces as a minimum for this part. If the MOQ level is high for a part from suppliers, e.g. 1000, it will be an good option to 3D print the part if the need is very low e.g. 3 pieces per year.

**Step 244:** Sometimes 3D printing suppliers have faster printing parameters compared with the standard printing parameters, e.g. the layer thickness can be 80um instead of standard 40 um. In this case, the printing time can be reduced up to e.g. 50%. So the part printing cost may be much less than the standard printing cost. The screening tool checks faster printing parameter for a part to see if the mechanical property of a faster printed part can reach the requirements. If the mechanical property of the faster printed part can reach the requirements, then faster printing parameters is used for this part to reduce cost.

**Step 245:** The screening tool checks post processing cost for a part. For example, the screening tool may check the drawing of a part and see that the tolerance level for this part is 0.1mm, it means that it needs further machining after 3D printing. In this case, a machining cost which may be a fixed value provided from 3D printing suppliers may be added for this part. For another example, if it is seen from the material data that the hardness value for a part is high, e.g. 60HRC, it means that the part needs to be heat treated after 3D printing. In this case, a heat treatment cost may be added as the post processing cost for this part.

### Section 260

In this section, business analysing for AM a spare part is performed in one or more of the flowing steps which may be performed in any suitable order.

**Step 261:** The screening tool derives data from SLM database on the Estimated Order Quantity (EOQ) and/or Minimum Order Quantity (MOQ). The EOQ may be calculated by a model from SLM database.

**Step 262:** The screening tool obtains an adjusted low order volume cost. The screening tool may obtain the adjusted low order volume cost from a database, e.g. the SLM database. For example, in the database, there has different prices for the same part depending on how many parts that are order from a current supplier, e.g. 100 EURO per piece for 100 pieces and 50 EURO per piece for 1000 pieces. The screening tool may also obtain the adjusted low order volume cost by using many data, such as MOQ, and try to use AI & machining learning to help have an estimate value if the adjusted low order volume cost is not possible to obtain from the database.

**Step 263:** The screening tool calculates a total AM cost for a part. The total AM cost for a part may depend on the printing cost depending on the faster printing parameters, the redesigned weight reduction and the MOQ, the post processing cost depending on the tolerance level, function group, surface roughness, material requirement, etc., the ratio of price to weight, 3D CAD file reengineering or redrawing 3D CAD file from 2D drawing, EOQ, adjusted low order volume cost etc.

After these steps listed above are performed, the screening tool has evaluated the suitability of 3D printing a spare part from the economic point of view. The screening tool may adjust the score set to the spare part and make a decision of whether to produce the spare part or not based on the analysing result on additive manufacturing cost for the spare part.

Therefore, according to some embodiments herein, the method may further comprise one or more of the following steps, as show in Fig. 1.

### Step 140

The screening tool determines whether the spare part needs a re-design or not based on a re-design weight reduction goal determined by comparing additive manufacturing cost for the spare part with the original price of the spare part.

### Step 150

The screening tool analyses additive manufacturing cost for the spare part based on any one or any combinations of the following parameters:
a) A ratio of price to weight;
b) A redesigned weight reduction;
c) A post processing cost;
d) 3D CAD file reengineering;
e) Faster printing parameters
f) Adjusted additive manufacturing cost related to any one or a combination of 3D CAD file reengineering, weight reduction, post processing cost, faster printing parameters;
g) Estimated Order Quantity;
h) Minimum Order Quantity;
i) Adjusted low order volume cost.

The screening tool may calculate a total additive manufacturing cost for the spare part based on the 3D printing cost related to the faster printing parameters, the redesigned weight reduction and the MOQ, the post processing cost related to the tolerance level, function group, surface roughness, material requirement, etc., as well as the ratio of price to weight, 3D CAD file reengineering, the adjusted low order volume cost related to EOQ/MOQ, etc.

### Step 160

The screening tool adjusts the score set to the spare part based on the analysing result on additive manufacturing cost for the spare part.

### Step 170

The screening tool makes a decision of whether to produce the spare part or not based on the analysing result on additive manufacturing cost for the spare part. That is the screening tool can perform a business analysis and make a go- or no-go decision for additive manufacturing a spare part automatically.

According to some embodiments herein, the method for automatically screening one or more databases to evaluate suitability of producing spare parts using additive manufacturing may be implemented by a machine learning function which enable its development by itself through its screening process.

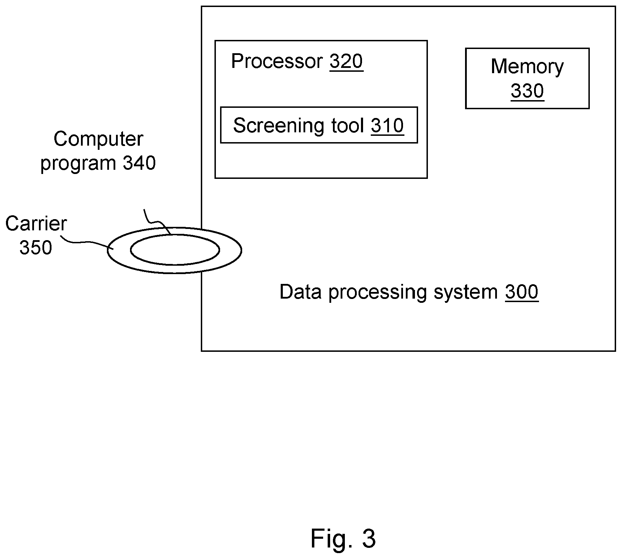

Fig. 3 shows a block diagram for a data processing system 300 in which a screening tool 310 for automatically screening one or more databases to evaluate suitability of producing spare parts using additive manufacturing according to embodiments herein may be implemented. The data processing system 300 may be a computer or any device has data processing capability. The data processing system 300 comprises the screening tool 310 configured to perform one or more of the method steps 100-170 and one or more of the screening algorithm steps 211-263. The data processing system 300 comprises a processor 320. The data processing system 300 may comprise other units, where a memory 330 is shown. The screening tool 310 may be implemented through one or more processors, such as the processor 320 comprised in the data processing system 300 together with computer program code 340 for performing the functions and actions of the embodiments herein. The program code 340 may also be provided as a computer program product 350, for instance in the form of a computer-readable medium or a data carrier carrying the computer program code for performing the embodiments herein when being loaded into the data processing system 300. The computer program code 340 may furthermore be provided as pure program code on a server or cloud and downloaded to the data processing system 300.

To summarize, embodiments herein provide a method and screening tool for automatically screening the spare parts category and databases and selecting the parts that is technical feasible and economical friendly for AM or 3D printing. The automatic screening tool can read into different databases and collect needed data from the databases. Based on the data, the screening tool will screen out the parts that is not suitable for additive manufacturing and give a score to the rest ones indicating the suitability of 3D printing, both technically and economically.

The method and screening tool can calculate the needed re-design weight reduction target. The method and screening tool can perform the business analysis based on the adjusted AM cost related to 3D CAD file reengineering, weight reduction, post processing cost, faster printing parameters, MOQ, EOQ, adjusted low order volume cost etc. and make a go- or no-go decision.

For example, the method and screening tool can screen out the parts that is not suitable for additive manufacturing from spare parts in e.g. Function Group 8 EU. All parts in this group are related to cab, i.e. the driver and passenger sitting area of a truck, and sales area is in Europe. The method and tool can give a score on 3D printing technical feasibility, a cost estimation by 3D printing, an economical indication of the potential cost/weight ratio for the rest ones in this group.

The screening tool has an OCR function that collects data from 2D drawings which can rescue a lot of parts that is lacking data in the database, e.g., the part does not have a material description in the database but stated in the 2D drawing.

The method and screening tool according to embodiments herein may be designed, adapted, or dedicated to each company's own databases.

With the method and screening tool according to embodiments herein, it will be one step closer to digital warehouse and manufacturing on demand. It will shorten the manufacturing lead time and save cost for vehicle industry.

It is to be understood that the present invention is not limited to the embodiments described above and illustrated in the drawings; rather, the skilled person will recognize that many changes and modifications may be made within the scope of the appended claims.

## Claims

1. A method for automatically screening one or more databases comprising information of vehicle spare parts to evaluate suitability of producing the spare parts using additive manufacturing, the method comprising:
collecting (110) information of a spare part from the one or more databases;
evaluating (120) the information of the spare part based on a set of criteria; and
setting (130) a score to the spare part based on an evaluating result, wherein the score indicates the suitability of producing the spare part using additive manufacturing.

2. The method according to claim 1, further comprising screening out the spare parts that are not suitable for additive manufacturing based on the evaluating result.

3. The method according to any one of claims 1-2, wherein collecting (110) information of a spare part from the one or more databases comprises collecting material information of the spare part from a 2-dimentiomal, 2D, drawing database using Optical Character Recognition, OCR, function.

4. The method according to any one of claims 1-3, wherein information of a spare part comprises any one or any combinations of the following parameters:
a) A parameter indicating whether a part is superseded;
b) A parameter indicating whether a part is a spare part;
c) Part age or End of Production, EOP, years;
d) Part name;
e) Part weight;
f) Part size;
g) Part type;
h) A parameter indicating special or critical characteristic of a part;
i) Part segment code;
j) Part material;
k) A parameter indicating whether there is 2D drawing for a part;
l) Annual consumption;
m) Tolerance level;
n) Surface roughness level
o) Function group.

5. The method according to any one of claims 1-4, wherein the set of criteria comprises any one or any combinations of the following criteria:
a) whether a part is superseded or not,
b) whether a part is a spare part or not;
c) whether a weight of a part is larger than a weight threshold or not;
d) whether a size of a part is larger than a size threshold or not;
e) whether a part type is a single part, assembly of parts or not;
f) whether a part name has forbidden words;
g) whether a part segment code has passing words or forbidden words;
h) whether a part material information is in any one of an engineering database, a 2D drawing database, a part segment code, a part name or not;
i) whether these is a 2D drawing for a part or not;
j) whether an annual consumption of a part is larger than an annual consumption threshold or not;
k) whether a tolerance level of a part is larger than a tolerance threshold value or not;
l) whether a surface roughness requirement of a part is larger than a surface roughness threshold value or not.

6. The method according to any one of claims 1-5, wherein the one or more databases comprises a Global Purchasing System, GPS, database storing information such as price and order quantity of the parts, an Engineering database storing information such as 2D drawings, technical requirement documents, materials, post treatment, function group, critical or special characteristics of the parts, a Service and market logistics database storing information such as minimum order quantity, warehouse cost, estimated order quantity.

7. The method according to any one of claims 1-6, further comprising:
determining (140) whether the spare part needs a re-design or not based on a re-design weight reduction goal determined by comparing additive manufacturing cost for the spare part with the original price of the spare part.

8. The method according to claim 7, further comprising analysing (150) additive manufacturing cost for the spare part based on any one or any combinations of the following parameters:
a) A ratio of price to weight;
b) A redesigned weight reduction;
c) A post processing cost;
d) 3D CAD file reengineering;
e) faster printing parameters;
f) Adjusted additive manufacturing cost related to any one or a combination of 3D Computer-Aided Design, CAD, file reengineering, weight reduction, post processing cost, faster printing parameters;
g) Estimated Order Quantity, EOQ;
h) Minimum Order Quantity, MOQ;
i) Adjusted low order volume cost related to any one or a combination of EOQ, MOQ.

9. The method according to claim 8, wherein analysing additive manufacturing cost for the spare part comprising calculating a total additive manufacturing cost for the spare part.

10. The method according to claim 8, further comprising adjusting (160) the score set to the spare part based on an analysing result on additive manufacturing cost for the spare part.

11. The method according to claim 8, further comprising making (170) a decision of whether to produce the spare part or not based on an analysing result on additive manufacturing cost for the spare part.

12. The method according to any one of claims 1-11 is implemented by a machine learning function.

13. A screening tool (310) configured to perform the method according to any one of claims 1-11.

14. A data processing system (300) comprising a screening tool (310) according to claim 13.

15. A computer program (340) comprising instructions which, when the program is executed by a computer, cause the computer to carry out the method according to any one of claims 1-11.

16. A computer-readable medium (350) comprising instructions which, when executed by a computer, cause the computer to carry out the method according to any one of claims 1-11.
